# EUROPEAN PATENT APPLICATION

(11) **EP 1 897 474 A1**
(43) Date of publication of application: **12.03.2008**
(21) Application number: 07253079.3
(22) Date of filing: 06.08.2007
(51) Int. Cl.: A47J 27/022, A47J 36/26

(54) **Interchangeable system for high-efficiency heating and cooking**

(30) Priority: 04.08.2006 US 499566
(71) Applicant: Jetboil, Inc., Manchester, NH 03101 (US)
(72) Inventor: Dowst, W. Perry, Weare, NH 03281 (US); Ring, R. John, Lebanon, NH 03766 (US)
(74) Representative: Stevens, Jason Paul

(57) **Abstract**

In a portable heating assembly, in which a heating utensil is supported on an upper surface of a utensil support, there is included a heat transfer element attached to a bottom surface of the heating utensil for both enhancing the heat transfer to the heating utensil and centring the heating utensil on the utensil support by engaging the periphery of the utensil support. Various shapes and placement configurations are provided with the heat transfer element being placed on either the radially inner or the radially outer side of the utensil support. Accommodation is also made for storage of the various components within the internal confines of the heating utensil.

## Description

### BACKGROUND OF THE INVENTION

This invention relates generally to stoves and cooking utensils and, more particularly, to portable heating units such as for camping and the like.

Typically the stoves that have been designed for outdoor use are relatively large and include a chassis or housing that includes a container for fuel, one or more burners, and a rather large grill member on which the cooking utensils are placed. It therefore accommodates a variety of shapes and sizes of flat bottomed vessels that can be placed anywhere on the grill. However, in addition to the lacking in portability due to their size, they are inefficient in their use of fuel, and there is no provision for ensuring proper placement of the cooking vessel in relation to the burner. Thus when vessels are not properly positioned on the stove, there is a risk that they can slide off of the grill or tip over and spill hot liquids on the user.

In order to accommodate hikers and backpackers that wish to carry a stove in a backpack, a portable heating assembly that is substantially reduced in size and with substantially increased heat transfer efficiency has been devised. Such a unit is shown and described in US 2004/0011350, which is assigned to the assignee of the present application and is incorporated herein by reference. While this unit provides compactness by way of an integrated vessel and burner design, as well as high efficiency by way of a folded fin heat exchanger integrally attached to the bottom of the cooking vessel, its functionality is mostly limited to beverages or food for one or two people. In addition, the vertical design of the cooking cup limits many cooking procedures such as use with a frying pan or large pots.

### SUMMARY OF THE INVENTION

Briefly, in accordance with one aspect of the invention, a heating vessel has a high efficiency heat transfer element attached to its bottom surface, with the overall shape being substantially the same as, but the size being slightly different from, that of the overall profile of the utensil support on which it is placed. In this way, high efficiency heat transfer can occur, while the interface between the heat transfer element and the utensil support functions to maintain the heating vessel in a centred position.

By yet another aspect of the invention, the relative sizing of the utensil support and heat transfer element may be chosen such that the heat transfer element is placed on the radially inner side of the utensil support, or alternatively, on the radially outer side thereof.

By yet another aspect of the invention, the overall profile of both the utensil support and the heat transfer element are accurately shaped and are preferably of a circular form.

By yet another aspect of the invention, either the utensil support or the heat transfer element may be either continuous or segmented, but preferably the heat transfer element is continuous and the utensil support is segmented.

By still another aspect of the invention, either the pot holder and/or the heat transfer element may include multiple, radially spaced elements to provide greater versatility in matching with different sized heating vessels.

In the drawings as hereinafter described, a preferred embodiment is depicted; however, various other modifications and alternate constructions can be made thereto without departing from the scope of the invention.

### BRIEF DESCRIPTION OF THE DRAWINGS

FIG. 1 is an exploded perspective view of a portable heating assembly in accordance with one aspect of the present invention.

FIG. 2 is a perspective view thereof as assembled.

FIG. 3 is a perspective view of the assembly in a stored condition.

FIG. 4 is a perspective view of the utensil support as assembled with the burner assembly.

FIG. 5A-5C are perspective views of the utensil support in accordance with one aspect of the invention.

FIG. 6 is a bottom view of the heating utensil with the relative position of the utensil support also shown.

FIG. 7 is an alternative embodiment thereof.

FIG. 8 is a further alternative embodiment thereof.

FIG. 9 is a perspective view of the heating utensil with an alternate embodiment of the utensil support.

FIG. 10 is a perspective view of heat transfer elements.

FIGS. 11 to 17 are schematic illustrations of various alternative embodiments of the utensil support and heat transfer element in accordance with the present invention.

### DESCRIPTION OF THE PREFERRED EMBODIMENT

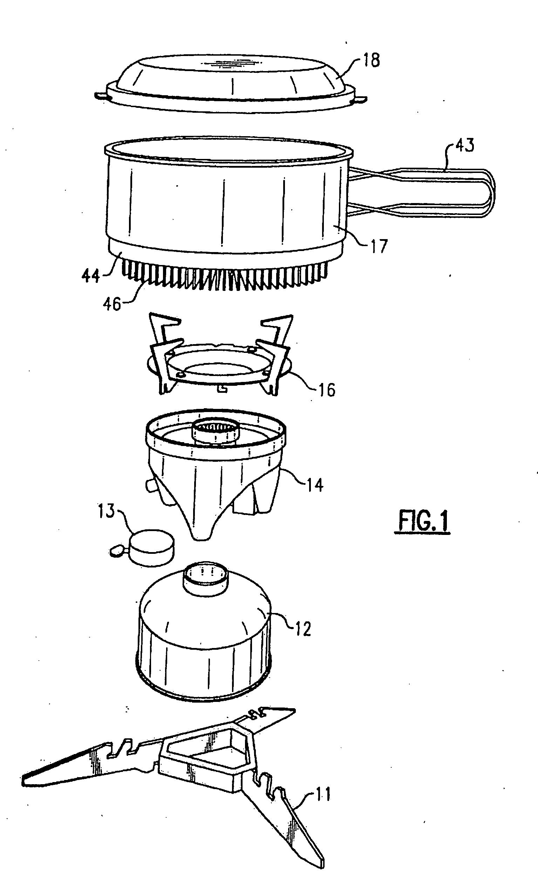

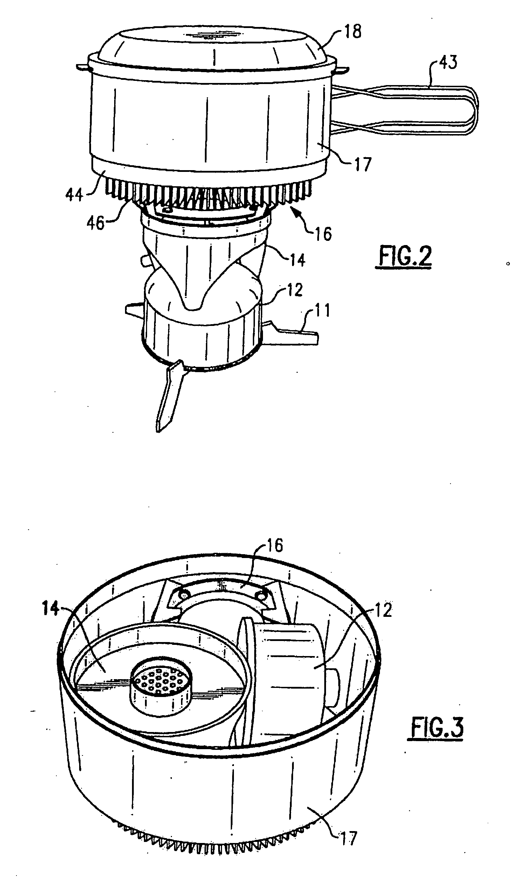

Reference is made to Figs. 1 and 2 wherein a portable heating assembly is shown in exploded and assembled configurations, respectively. The assembly includes a stand 11 for supporting a fuel container 12 having a cap 13. A burner assembly 14 then sits atop the fuel container 12 and supports a utensil support 16. A heating utensil 17, having a lid 18 then sits on top of the utensil support 16 as shown.

As will be seen in Fig. 3, the heating utensil 17 is preferably sized to enable the entire assembly to be stored within the confines of the heating utensil 17. That is, after placing the stand 11 in the bottom of the heating utensil 17, the fuel container 12 with its cap 13, the burner assembly 14 and the pot holder 16 are all placed within the heating utensil 17 such that the lid can then be placed on the top and the entire assembly can be stored within a backpack or the like. When ready for use, the entire assembly can easily be removed and assembled as shown in Fig. 2.

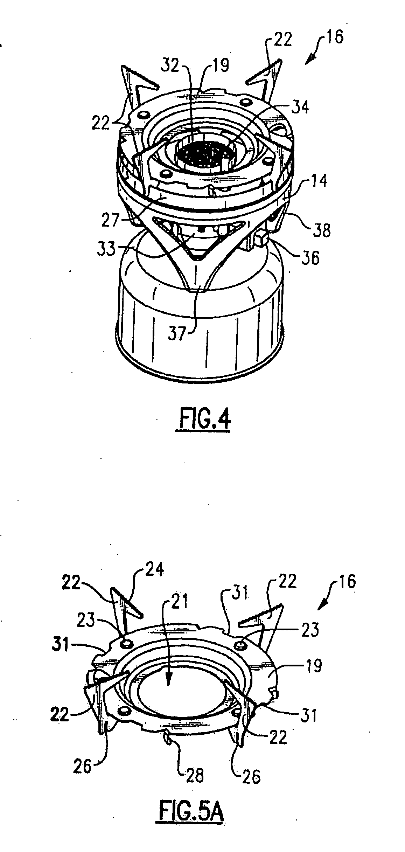

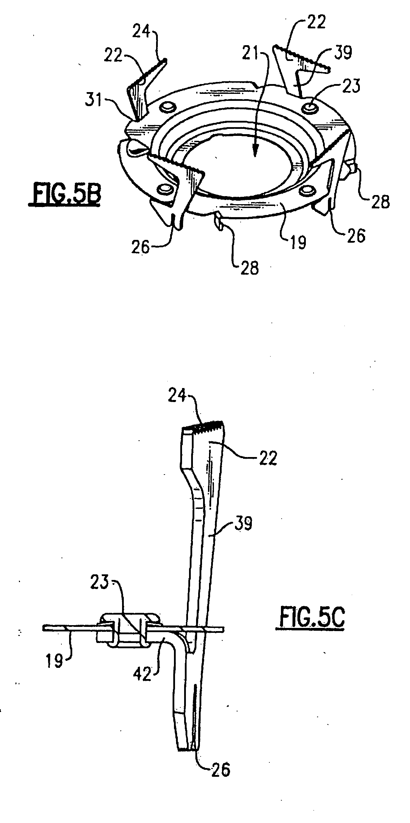

Referring now to Figs. 4 and 5A to 5C, the utensil support is shown in a stand alone condition and as attached to the burner assembly 14. The utensil support 16 includes an annular reflector 19 having a central round cutout 21. The utensil support 16 also includes support arms 22 that are coupled to the outer periphery of the reflector 19 using tension washers 23. Other attachment modes are able to be used such as pins or rivets. In the illustrated embodiment, the utensil support 16 includes four support arms 22. However, in other embodiments, two, three, five, six, seven, or eight support arms may be included. ,The support arms 22 have a ridged or serrated surface 24 that contacts the utensil when in use, but other embodiments may be without the ridges. The reflector 19 and the support arms 22 may be made from, for example, stainless steel, titanium, or any other suitable material. The reflector 19 and the support arms 22 may be formed in a stamping operation.

With reference to FIGS. 4 and 5A to 5C, the support arms 22 are rotatable into a first position to engage the burner assembly 14, and each support arm 22 includes a vertical tapered slot 24 that is engageable with a base 27 disposed on the burner assembly 14. The slots 26 engage the base 27, which in one from, may be a thin metal rim. Gravity and the downward force of a utensil resting on the support arms 22 of the utensil support 100 (not shown) secure the utensil support 16 to the base 27 of the burner assembly 14. Additional vertical tabs 28 formed on the reflector 19 are also engageable with the base 27 of the burner assembly 14, and provide extra support and tip resistance to the heating assembly.

With reference to FIG. 5B, it will be seen that the support arms 22 are rotatable into a second position such that the arm body 29 fits into a recess 31 on the outer periphery of the reflector 19 as shown for the purpose of storage.

In use, the reflector 19 shields the burner assembly 14 from radiative heating resulting from heating a utensil on the utensil support 16. In certain instances, the reflector 19 may reach temperatures of up to 700 degrees Fahrenheit (approximately 370° C) while the burner assembly 14 below remains at temperatures of 150 degrees Fahrenheit (approximately 65° C) or below, protecting vulnerable components within the burner assembly 14.

With reference to FIG. 4, the burner assembly 14 includes a heat source that takes the form of a burner or burner head 32. The burner receives fuel from a fuel source 12 that couples to a fuel intake port 33 of the burner assembly 14. In this embodiment, the fuel source 12 is a gas source, such as a pressurized canister of mixed propane and butane. Such fuel sources are known in the art, particularly in the camping and hiking fields. In other embodiments, the fuel source could be of a different type, such as white gas, kerosene, alcohol or gasoline. In yet other embodiments, fuel sources could include electricity or solid fuels. Ambient air is received via a gas flow path (described below) formed in the burner assembly 14. An igniter 34 provides a spark to burner 32, which causes combustion at the burner 32. The igniter 34 generates sparks in response to user activation of the igniter button 36.

The burner requires a certain amount of oxygen to produce and maintain a flame. The flame produces heated exhaust as it bums. Accordingly, the burner assembly 14 includes a gas flow path configured to enable the supply of oxygen to the burner 32 and the flow of exhaust from the burner 32. In operation, a partial vacuum is formed through the gas flow path that achieves this result.

Portions of the utensil support 16 and the burner assembly 14 combine to form the gas flow path. The burner assembly 14 includes a bottom housing 37 that includes a plurality of air inlet vents 38 that allow air to flow to the burner 32 from the external environment. In this embodiment, the bottom housing 37 may be made of a thermoplastic material, and also forms legs that support the burner assembly 14 when the fuel source 12 is not attached. When a cooking utensil is disposed on the utensil support 16, an exhaust path is formed between the base of the cooking utensil and a top portion of the reflector 19. The exhaust path enables the gases produced in the combustion process to travel upwards from the burner 32 through the central round cutout 21 of the reflector 19 and then radially outward to the surrounding atmosphere.

Referring now FIG. 4C, a support arm 22 is shown to include an upstanding body portion 39 terminating in the ridged surface 24, and a co-planar leg portion 41 extending downwardly and having a tapered slot 26 therein for interfacing with the base 27 as described hereinabove. An integrally connected and substantially normally extending connecting arm 42 is provided for attachment of the arm 22 to the reflector 19 by way of the tension washer 23.

Referring now more specifically to the heating utensil 17, it will be seen in Figs. 1 and 2 that one or more handles 43 may be attached to one side thereof for placing the heating utensil on or off the utensil support 16.

On the bottom surface 44 of the heating utensil 17 there is disposed a heat transfer element 46 that is securely fastened to the bottom surface 44 for two purposes: 1) to bring about effective heat transfer from the burner below to the heating utensil 17, and 2) to provide an interface between the heating utensil 17 and the utensil support 16 for purposes of centring the heating utensil 17 thereon and maintaining it in a fixed position.

The heat transfer element 46 is preferable a single element that is formed in a square wave, sinusoidal manner to form a circle. The construction of the heat transfer element 46 and the manner in which it is attached to the heating utensil 17 is described in US 2004/0011350, assigned to the assignee of the present invention and incorporated herein by reference.

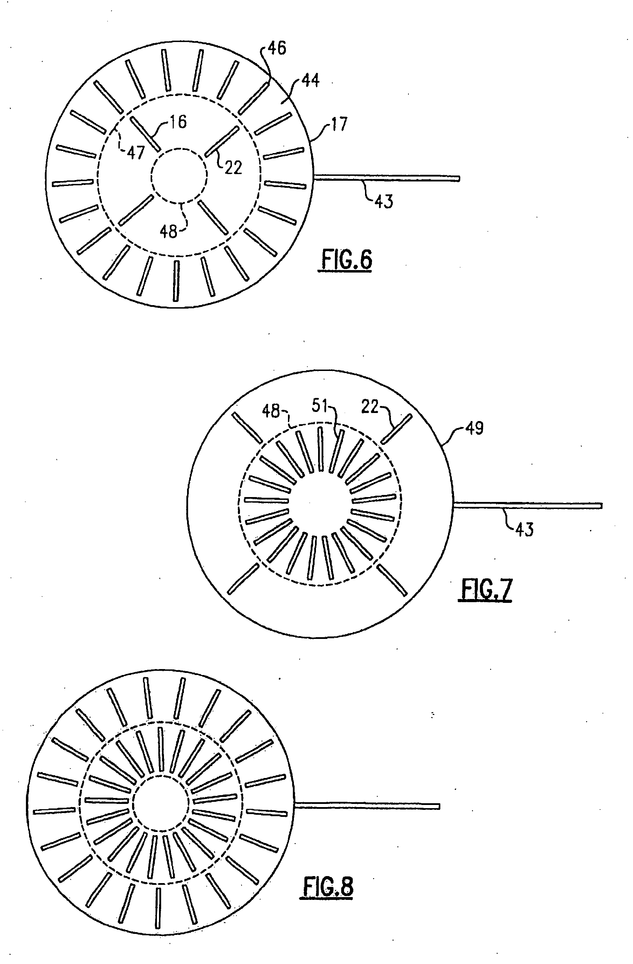

Referring now to Fig. 6, the relative sizes and positions of the support arms 22 of the utensil support 16 and the heat transfer element 46 are shown. It will be seen that utensil support 16, with its individual support arms 22 define, at their radially outer ends, an outer peripheral profile as indicated by the dotted line circle 47 and, by their radially inner ends, an inner peripheral profile as indicated by the dotted line circle 48. It will be further recognized that the dotted line profile 47 has a diameter which is slightly smaller than the inner diameter of the heat transfer element 46 such that the heat transfer element 46 can be easily placed over the outer ends of the support arms 22, but with a relatively close fit relationship such that the support arms 22 tend to maintain the heat transfer element 46 and its attached heating utensil in a fixed position.

In Fig. 7, a smaller heating utensil 49 has a bottom surface 51 to which a smaller heat transfer element 50 is attached. The relative size of the heat transfer element 50 and the support arms 22 are such that the heat transfer element 50 fits within the dotted line profile 48 as defined by the radially inner ends of the support arms 22. Again, the support arms 22 tend to centre the heating utensil 49 and maintain in its fixed position.

As shown in Fig. 8, the heating utensil 17 is shown to include a pair of radially spaced heat transfer elements 46 and 50, such that they respectively fit on the outer and inner profiles of the support arms 22 as shown.

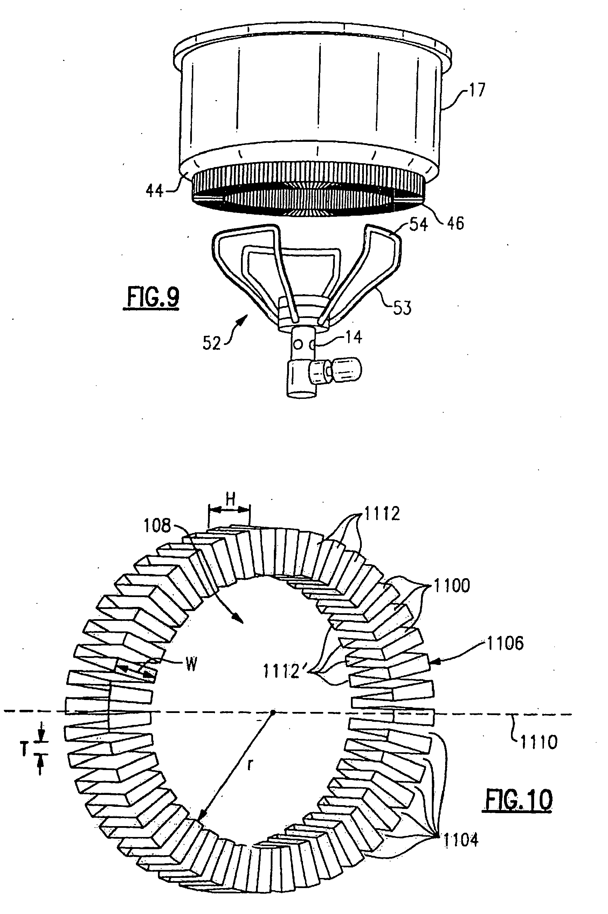

Shown in Fig. 9 is an alternative embodiment of a utensil support 52 which is attached to the burner assembly 14 and includes a plurality of elements 53 that extend upwardly and radially outwardly to terminate at annular segments 54 as shown. The annular segments 54 have an upper surface on which the heating utensil bottom surface 44 is received. The radially outer surfaces of the annular segment 54 engage the inner diameter of the heat transfer element 46 attached to the bottom surface 44 of the heating utensil 17. In this way, the heating utensil 17 is centred and maintained in its position as described hereinabove.

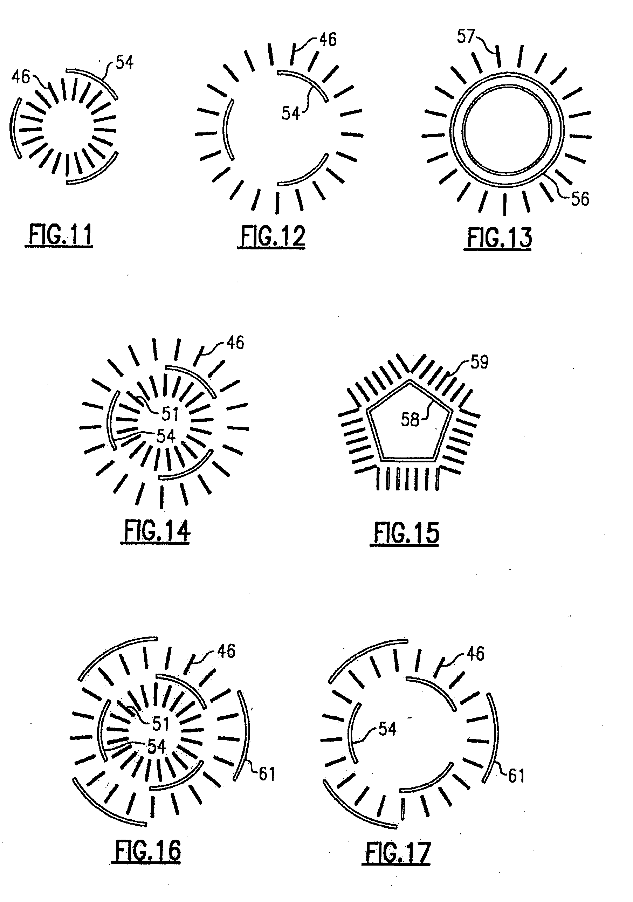

In Figs 11 to 17 there are other variations with respect to both the heat transfer element 46 and the utensil support that may be used in accordance with the present invention. In Fig. 11, the heat transfer element 46 is so placed that the radially outer surface thereof engages the radially inner surface of the annular segments 54. In Fig. 12, the heat transfer element 46 is placed on the radially outer side of the annular segments as is shown in Fig. 9.

In Fig. 13, a utensil support 56 is shown to be a unitary ring, and the heat transfer elements, rather than being a single continuous element are segmented into a plurality of elements with each engaging the outer surface of the utensil support 56. These heat transfer elements 57 may, of course, be placed on the radially inner side of the utensil support 56.

In Fig. 14, there is shown a pair of radially spaced heat transfer elements 51 and 46 with the plurality of annular segments 54 disposed therebetween. In this way, the positioning and stability functions are accomplished by having a heat transfer element on both the radially inner and outer sides of the utensil support.

The Fig. 15 embodiment of the present invention shows a non-annular (i.e. polygonal) shaped utensil support 58 that is surrounded by a non-annular heat transfer element 59. Such a utensil support can have any number of sides (i.e. three or more), and can accommodate a polygon shaped heat transfer element as shown or a round heat transfer element.

In the Fig. 16 embodiment, there is provided a pair of radially spaced heat transfer elements 51 and 46 as well as a pair of radially spaced sets of annular segments 54 and 61. An alternative embodiment is shown in Fig. 17 provides a pair of radially spaced sets of annular segments 54 and 61 with a single heat transfer element 46 disposed therebetween.

It should be recognized that the sizes and shapes of both the utensil support and the heat transfer elements can be varied without departing from the scope of the present invention. Although various forms have been shown and described, further variations and combinations can also be used to accomplish the present invention.

## Claims

1. A portable heating assembly of the type having a burner and an associated fuel source, comprising:
a utensil support mounted above the burner and having a substantially horizontally disposed framework that includes a plurality of peripheral points in a horizontal plane;
a heating utensil having a bottom wall and attached upwardly extending sidewalls for containing material to be heated; and
a heat transfer element attached to a bottom surface of said bottom wall and extending downwardly therefrom to form in a horizontal plane a centring portion which is so sized and shaped with respect to said plurality of peripheral points of said utensil support that when the cooking utensil is placed on the utensil support said centring portions engage said plurality of peripheral points to centre said heating utensil on said utensil support.

2. A portable heating assembly of the type having a burner and a source of fuel therefor, comprising:
a heating utensil having a bottom surface;
a utensil support mounted above the burner for supportably receiving the heating utensil on an upper surface thereof, said utensil support including a plurality of peripheral points in a horizontal plane;
a heat transfer element attached to said bottom surface and extending downwardly to define a profile which is so sized and shaped with respect to said plurality of peripheral points of said utensil support that when the heating utensil is placed on the heat transfer support, said heat transfer element engages said plurality of peripheral points so as to centre said heating utensil on said utility support.

3. A portable heating assembly as set forth in claim 1 or claim 2, wherein said utensil support is mounted to said burner.

4. A portable heating assembly as set forth in any preceding claim wherein said heat transfer element is arcuate in shape.

5. A portable heating assembly as set forth in claim 4 wherein said heat transfer element is round in shape.

6. A portable heating assembly as set forth in any preceding claim, wherein said heat transfer element is so disposed as to be placed radially outwardly from said peripheral points.

7. A portable heating assembly as set forth in any preceding claim, wherein said heat transfer element is so disposed as to be placed radially inwardly from said utensil support.

8. A portable heating assembly as set forth in any preceding claim, wherein said utensil support peripheral points are so disposed as to be placed on the radially outer side of said utensil support.

9. A portable heating assembly as set forth in any preceding claim, wherein said plurality of utensil support peripheral points are so disposed as to be placed on the radially inner periphery of said utensil support.

10. A portable heating assembly as set forth in any preceding claim, wherein said heat transfer element is a continuous unitary element.

11. A portable heating assembly as set forth in claim 10 wherein said heat transfer element is attached to said heating utensil along its entire length.
